# EUROPEAN PATENT SPECIFICATION

(11) **EP 2 766 227 B1**
(45) Date of publication and mention of the grant of the patent: **15.03.2017**
(21) Application number: 11873831.9
(22) Date of filing: 11.10.2011
(51) Int. Cl.: B60R 11/04

(54) **CAMERA ARRANGEMENT**
KAMERAANORDNUNG
AGENCEMENT DE CAMÉRA

(43) Date of publication of application: 20.08.2014
(73) Proprietor: Autoliv Development AB, 447 83 Vårgårda (SE)
(72) Inventor: KNUTSSON, Per, 58238 Linköping (SE)
(74) Representative: Sandstedt, Jonas Sven James
(86) International application number: PCT/SE2011/051212
(87) International publication number: WO 2013/055263

(56) References cited:
- EP-A2- 2 189 340
- DE-A1-102006 059 555
- DE-A1-102009 027 512
- DE-A1-102009 027 512
- FR-A1- 2 672 857
- US-A1- 2008 283 782
- US-A1- 2008 283 782

## Description

The present invention relates to a light guiding element arranged to be positioned between a vehicle window and a camera device which comprises a camera lens. The light guiding element comprises an inlet surface and an outlet surface where the inlet surface is arranged to face the vehicle window and the outlet surface is arranged to face the camera lens when the light guiding element is mounted.

Today, cameras may be used in vehicles for surveillances of different parameters in order to provide driver assistance functions. Such driver assistance functions may for example comprise rain detection, recognition of traffic signs, detection of the vehicle's position in the lane and detection of surrounding objects such as vehicles and pedestrians. Cameras are also used to provide a rear view used when reversing vehicles, especially large vehicles with a reduced backwards view.

Many cameras used for forward detection are positioned in front of the windscreen of the vehicle, but this positioning brings a number of problems since there is a gap between the camera lens and the curved and inclined windscreen. This gap results in that reflections from the vehicle interior, originating from objects below the windscreen, occur in scenes observed with the camera. The camera lens is furthermore exposed to the interior environment of the vehicle, where dust, smoke particles and humidity eventually leads to debris and/or moist that constitute obstacles on the camera lens. It is furthermore desired that the camera lens is aligned with the field of view, which results in that the camera reduces the sight for a driver and may constitute a disturbance.

The above problems have been attended to previously, for example by using a camera connected to and aimed at a windscreen. A tube-like coupling element connects the camera to the windscreen such that the space spanned by the tube between the camera and the windscreen is sealed off from the external environment.

This arrangement has several disadvantages, for example the space taken up by the camera arrangement is relatively large, especially if the windscreen has a high degree of inclination, resulting in that a relatively large portion of the windscreen is blocked by the tube. Furthermore, installation and removal of such an arrangement is relatively elaborate and laborious.

WO 2005113293 discloses a light guiding body made of solid and optically transparent material that is arranged between the lens of the camera and the pane.

WO 2009147223 discloses a prism arrangement with at least two prisms, which are arranged behind one another, oriented in such a manner, that they have opposite refraction directions and their mutually facing surfaces do not extend parallel to one another.

The document FR 2672857 relates to prism arrangements that suffer from dispersion and distortion.

DE 10 2009 027512 A1 discloses an arrangement of a vehicle window, a camera and a light guiding element positioned therebetween according to the preamble of claim 1.

None of these disclosures does, however, solve the mentioned problems.

The object of the present invention is to provide a relatively uncomplicated camera arrangement which occupies less of the field of view for occupants of a vehicle.

This object is obtained by means of a light guiding element arranged to be positioned between a vehicle window and a camera device which comprises a camera lens. The light guiding element comprises an inlet surface and an outlet surface where the inlet surface is arranged to face the vehicle window and the outlet surface is arranged to face the camera lens when the light guiding element is mounted. The light guiding element further comprises a reflective surface which is arranged to guide light from the inlet surface to the outlet surface by means of reflection in the reflective surface.

According to an example, the light guiding element and the vehicle window have refractive indexes which have the same value. If the inlet surface is mounted to the vehicle window by means of an adhesive, the adhesive preferably has the same refractive index as the light guiding element and the vehicle window. Matched refractive indices will improve transmission of light to the camera.

According to another example, at least one of the inlet surface and the outlet surface comprises an anti-reflex coating. Such a coating is of most use for the outlet surface if the refractive indices of windshield, adhesive and inlet surface match.

According to another example, the light guiding element comprises a sealing element arranged to be positioned between the outlet surface and the camera lens. The sealing element is arranged to seal a space between the outlet surface and the camera lens.

Other examples are disclosed in the dependent claims.

A number of advantages are obtained by means of the present invention. For example:
- Reduced physical footprint;
- First pitch angle of camera system can be altered, adding freedom in choice of pitch angles of the camera, the camera not pointing into the compartment;
- Reduced physical size of space between camera and wind shield;
- Ease of mounting;
- Observation path of camera protected from debris, humidity etc.; and
- Improved transmission.

### Brief description of the drawing

The present invention will now be described more in detail with reference to the appended drawings, where:
Figure 1 shows a cut-open side view of a vehicle windscreen where the present invention is mounted; and
Figure 2 shows a top view of a front part of a vehicle showing a camera position.

### Detailed description

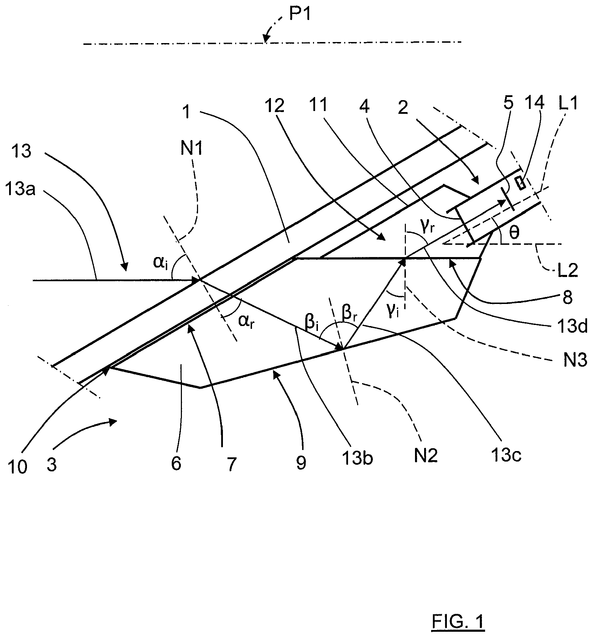

With reference to Figure 1, there is a windscreen 1 of a vehicle. A camera 2 is mounted inside the passenger compartment 3, the camera 2 comprising a camera lens 4 and an image sensor 5.

A light guiding element 6 is positioned between the windscreen 1 and the camera 2, where the light guiding element 6 is arranged to guide incident light that passes the windscreen to the camera 2.

The light guiding element 6 comprises an inlet surface 7 and an outlet surface 8, the inlet surface 7 facing the windscreen 1 and the outlet surface 8 facing the camera lens 4 when the light guiding element is mounted, as shown in Figure 1.

According to the present invention, the light guiding element 6 comprises a reflective surface 9, the reflective surface 9 being arranged to guide light from the inlet surface 7 to the outlet surface 8. The light guiding element 6 device thus includes one reflection, in the reflective surface 9.

According to an example, the light guiding element 6 has a first refractive index *n*₁ and the windscreen 1 has a second refractive index *n*₂, where the first refractive index *n*₁ is matched to the second refractive index *n*₂ such that the first refractive index *n*₁ and the second refractive index *n*₂ are the same.

Furthermore, in order to mount the light guiding element 6 to the windscreen 1, an adhesive 10 is used and positioned between the inlet surface 7 and the windscreen, where the adhesive has third refractive index *n*₃. The third refractive index *n*₃ also matches the first refractive index *n*₁ and the second refractive index *n*₂, in order to improve light transmission to the camera 2 and to avoid dispersion or splitting of colours. This means that the first refractive index *n*₁, the second refractive index *n*₂ and the third refractive index *n*₃ are the same.

In order to acquire an optically well-functioning mounting of the light guiding element 6 to the windscreen 1, the inlet surface 7 has a shape that mainly follows the shape of the windscreen, such that at least the main part of the inlet surface 7 is enabled to make contact to the windscreen 1, although in practice, the adhesive 10 prevents the inlet surface 7 to make direct contact to the windscreen when an adhesive 10 as described is used.

In order to prevent objects to obscure the camera lens 4 and/or the outlet surface 8, the light guiding element 6 comprises a hollow sealing element 11 positioned between the outlet surface 8 and the camera lens 4, where the sealing element 11 is arranged to seal the space 12 between the outlet surface 8 and the camera lens 4. Preferably, the sealing element 11 is water tight, keeping the camera lens 4 free from both debris and condensation.

In the following, a beam of incident light 13 will be followed, where the incident light beam 13 is divided into a first light beam part 13a, a second light beam part 13b, a third light beam part 13c and a fourth light beam part 13d. The incident light 13 is here originating from an object in the center of the camera's field of view. The first light beam part 13a strikes the windscreen 1 with a first entrance angle αᵢ measured from a first reference line N1, the first reference line N1 being perpendicular to the windscreen 1 at the point of entrance. Since the ambient air has an air refractive index *n*₀ that differs from the second refractive index *n*₂ of the windscreen 1, the first light beam part 13a is refracted a first refracted angle αᵣ to the second light beam part 13b, the first refracted angle αᵣ also being measured from the first reference line N1.

The second light beam part 13b continues through the windscreen 1, through the adhesive 10 and into the light guiding element 6 via the inlet surface 7 without any deflection since the first refractive index *n*₁, the second refractive index *n*₂ and the third refractive index *n*₃ are the same. The second light beam part 13b is reflected at the reflective surface 9, and continues as the third light beam part 13c. The angle of incidence βᵢ equals the angle of reflection βᵣ, these angles βᵢ, βᵣ being measured from a second reference line N2, the second reference line N2 being perpendicular to the reflective surface 9.

The third light beam part 13c continues through the light guiding element 6 towards the outlet surface 8, and strikes the outlet surface 8 at a second entrance angle γᵢ measured from a third reference line N3, the third reference line N3 being perpendicular to the outlet surface 8. Since the ambient air in the sealed space 12 outside the outlet surface 8 has an air refractive index *n*₀ that differs from the first refractive index *n*₁ of the light guiding element 6, the third light beam part 13c is refracted a second refracted angle γᵣ to the fourth light beam part 13d, the second refracted angle γᵣ also being measured from the third reference line N3. The fourth light beam part 13d continues towards the camera lens 4 and image sensor 5. The second refracted angle γᵣ also constitutes an exit angle.

The reference lines N1, N2, N3 are only imagined lines, used for better understanding of the present invention.

The angle of incidence βᵢ and the angle of reflection βᵣ of the reflective surface 9 are an arbitrary choice between 0° and 90°. However, for practical reasons, the choice will have a more limited range. If the angle of incidence βᵢ is large enough, no reflective coating is needed on the reflective surface 9, since total internal reflection will occur.

The angle of incidence to the outlet surface 8, the second entrance angle γᵢ, should preferably be identical to the first refracted angle αᵣ, i.e. γᵢ = αᵣ, and this is accomplished by proper design of the light guiding element 6. Due to the optic properties of the windscreen 1, the adhesive 10 and the light guiding element 6, where their refractive indexes *n*₁, *n*₂, *n*₃ are the same, this in turn leads to that the first entrance angle αᵢ equals the second refracted angle γᵣ. When the first entrance angle αᵢ and the second refracted angle γᵣ are equal, it is possible to guide the incident light beam 13 to the camera 2 without any dispersive effect, i.e. no prism effect.

Thus, by means of the present invention, a first mounting and viewing angle, first pitch angle, θ of the camera 2 in relation to the field of view may be chosen in a desired manner. The first pitch angle θ is measured between a first line L1 and a second line L2, where the first line L1 constitutes an optical axis of the camera lens 4 and is parallel to light incident straight 13d into the camera 2, and the second line L2 is parallel to a horizontal plane P1.

The acquired freedom in choice of first pitch angle θ of the camera 2 is for example desired when having an optical window in the line of sight and where a small physical footprint is needed. The camera 2 can thus be mounted out of sight if necessary. The present invention makes this arrangement possible by means of the reflective surface 9. With the term footprint, the physical size of the windscreen area that is occupied is meant.

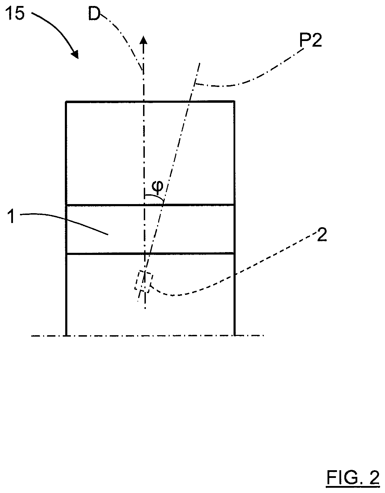

The first pitch angle θ is defined in the plane of Figure 1, but the light guiding element 6 may also be designed such that the camera 2 also is oriented in a sideways direction, out of the plane of Figure 1. This is illustrated in Figure 2, where a top view of a front part of a vehicle 15 with a windscreen 2 is shown. The camera 2 is mounted to the inner roof of the vehicle 15, where a second pitch angle ϕ is presented between a main forward travelling direction D of the vehicle 15 and a vertical plane P2 running through the optical axis L1 of the camera lens, the vertical plane P2 following the plane of Figure 1 and being perpendicular to the horizontal plane P1.

In practical wording, the horizontal plane P1 mainly follows the ground onto which the vehicle is positioned, and possibly travelling on.

With reference to the above, the first pitch angle θ can be regarded as being measured in elevation with reference to the main forward travelling direction D of the vehicle 15, and the second pitch angle ϕ can be regarded as being measured in azimuth with reference to said main forward travelling direction D.

The dimension of the light guiding element 6 is dependent on the field of view of the camera 2 and the inclination angle of the windscreen 1. It may be necessary to shield the outer portions of the reflective device from incoming light in other directions than the field of view, to avoid stray light.

It is to be noted that since one reflection occurs in the reflective surface 9, the image striking the image sensor 5 is upside-down, which is handled by means of image processing, preferably by means of an image processing device 14 comprised in the camera 2, the image processing device 14 being schematically indicated in Figure 1. Generally, the image processing device 14 is arranged to compensate for any undesired orientation of the detected images. The image processing device 14 comprises suitable software for handling such processing.

The present invention is not limited to the above, but may vary freely within the scope of the appended claims. For example, an alternative mounting of the light guiding element 6 may for example be constituted by a mounting to the camera 2 (not illustrated), where the camera 2 is mounted to the inner roof of the vehicle. In this case, the light guiding element 6 may be mounted to the camera 2 via the sealing element 11.

The sealing element 11 may be filled with a gas or a material with certain desired properties, for example a certain refractive index. It may also be constituted by such a material, and thus not being hollow.

Furthermore, it is not necessary that the first refractive index *n*₁, the second refractive index *n*₂ and the third refractive index *n*₃ are the same, but this may lead to undesired optical characteristics.

It is not necessary to have a sealing element 11, although that will require attendance of the camera lens 4 which may become moist and covered with debris.

The inlet surface 7 and the outlet surface 8 may each comprise an antireflective coating in order to improve the transmission, although this is not necessary for the basic functionality of the present invention.

Furthermore, the reflective surface 9 may comprise a reflective coating, but this is not necessary for the basic functionality of the present invention, but probably at least needed when the angle of incidence βᵢ is small. Furthermore, for the reflective surface 9, total internal reflection will occur for the large angles of incidence βᵢ of the incoming light towards the reflective surface 9.

The examples described above relate to coupling of light through the windscreen 1 of a vehicle to a camera 2. Alternative embodiments are other vehicles, such as aircrafts, boats and buses. The window concerned may be any type of vehicle window, and is not limited to the windscreen. Further, the present invention can be used in any kind of environment where the first pitch angle θ of the camera 2 needs to be altered, in relation to the field of view, preferably with an optical window in the line of sight and where a small physical footprint is needed.

The camera 2 is constituted by any suitable camera device.

The adhesive 10 may be any type of suitable adhesive, for example a film or a thin layer of an adhering compound with transparent qualities.

The dimension of the reflective device is dependent on the field of view of the camera and the rake angle of the wind shield, but will in general be smaller than a corresponding light trap solution. It might be necessary to shield the outer portions of the reflective device from incoming light in other directions than the field of view, to avoid stray light.

The light guiding element 6 is made in any suitable transparent materials such as for example plastics or glass.

The light guiding element 6 may be part of a mounting structure between a rear view mirror (not shown) and the windscreen 1. In that case, the rear view mirror is mounted to the light guiding element 6. Such an arrangement could make a change of windscreen less complicated, and enhance the windscreen environment.

An optical path between transmitter and receiver of an optical rain sensor can be part of the light guide 6.

Where terms like perpendicular, equal and same are used, these terms are not to be interpreted to be mathematically exact, but within what is practically obtainable.

## Claims

1. An arrangement of a vehicle window (1), a camera device (2) and a light guiding element (6) positioned therebetween, the camera device (2) comprising a camera lens (4), the light guiding element comprising an inlet surface (7) and an outlet surface (8), the inlet surface (7) being arranged to face the vehicle window (1) and the outlet surface (8) being arranged to face the camera lens (4) when the light guiding element (6) is mounted, where the light guiding element (6) comprises a reflective surface (9), the reflective surface (9) being arranged to guide light from the inlet surface (7) to the outlet surface (8) by means of reflection in the reflecting surface (9), **characterized in that** the outlet surface (8) is arranged such that a first refracted angle (αᵣ) for light that has entered through the inlet surface (7) towards the reflective surface (9) equals a second entrance angle (γᵢ) for light at the outlet surface (8) from the reflective surface (9), each of said angles (γᵢ, αᵣ) being measured from a corresponding reference line (N1, N3), each reference line (N1, N3) being perpendicular to the corresponding surface (7, 8).

2. The arrangement according to claim 1, **characterized in that** the light guiding element (6) has a first refractive index (*n*₁) that is the same as a second refractive index (*n*₂) of a vehicle window (1).

3. The arrangement according to any one of the preceding claims, **characterized in that** at least one of the inlet surface (7) and the outlet surface (8) comprises an anti-reflex coating.

4. The arrangement according to any one of the preceding claims, **characterized in that** the reflective surface (9) comprises a reflective coating.

5. The arrangement according to any one of the preceding claims, **characterized in that** the inlet surface (7), the outlet surface (8) and the reflective surface (9) are arranged such that the camera (2) is mounted having a first pitch angle (θ) being measured in elevation with reference to a main forward travelling direction (D) of a vehicle (15) into which the light guiding element (6) and the camera (2) are mounted, and a second pitch angle (ϕ) being measured in azimuth with reference to said main forward travelling direction D.

6. The arrangement according to claim 5, **characterized in that** the camera (2) comprises an image processing device (14) that is arranged to compensate for any undesired orientation of the detected images.

7. The arrangement according to claim 5 **characterized in that** the light guiding element comprises a sealing element (11) arranged to be positioned between the outlet surface (8) and the camera lens (4), the sealing element (11) being arranged to seal a space (12) between the outlet surface (8) and the camera lens (4).

## Patentansprüche

1. Anordnung aus einem Fahrzeugfenster (1), einer Kameravorrichtung (2) und einem dazwischen platzierten Lichtleitelement (6), wobei die Kameravorrichtung (2) ein Kameraobjektiv (4) umfasst, wobei das Lichtleitelement eine Eintrittsfläche (7) und eine Austrittsfläche (8) umfasst, wobei die Eintrittsfläche (7) so angeordnet ist, dass sie dem Fahrzeugfenster (1) zugewandt ist, und wobei die Austrittsfläche (8) so angeordnet ist, dass sie dem Kameraobjektiv (4) zugewandt ist, wenn das Lichtleitelement (6) montiert ist, wobei das Lichtleitelement (6) eine reflektierende Fläche (9) umfasst, wobei die reflektierende Fläche (9) so angeordnet ist, dass sie Licht mittels Reflexion in der reflektierenden Fläche (9) von der Eintrittsfläche (7) zur Austrittsfläche (8) leitet, **dadurch gekennzeichnet, dass** die Austrittsfläche (8) so angeordnet ist, dass ein erster Brechungswinkel (αᵣ) für Licht, das durch die Eintrittsfläche (7) in Richtung der reflektierenden Fläche (9) eingetreten ist, einem zweiten Einfallswinkel (γ₁) für Licht an der Austrittsfläche (8) von der reflektierenden Fläche (9) entspricht, wobei jeder von den Winkeln (γ₁, αᵣ) von einer entsprechenden Bezugslinie (N1, N3) aus gemessen wird, wobei jede Bezugslinie (N1, N3) senkrecht zur entsprechenden Fläche (7, 8) verläuft.

2. Anordnung nach Anspruch 1, **dadurch gekennzeichnet, dass** das Lichtleitelement (6) einen ersten Brechungsindex (n₁) aufweist, der identisch mit einem zweiten Brechungsindex (n₂) eines Fahrzeugfensters (1) ist.

3. Anordnung nach einem der vorhergehenden Ansprüche, **dadurch gekennzeichnet, dass** die Eintrittsfläche (7) und/oder die Austrittsfläche (8) eine Antireflexbeschichtung aufweist.

4. Anordnung nach einem der vorhergehenden Ansprüche, **dadurch gekennzeichnet, dass** die reflektierende Fläche (9) eine reflektierende Beschichtung aufweist.

5. Anordnung nach einem der vorhergehenden Ansprüche, **dadurch gekennzeichnet, dass** die Eintrittsfläche (7), die Austrittsfläche (8) und die reflektierende Fläche (9) so angeordnet sind, dass die Kamera (2) mit einem ersten Neigungswinkel (Θ) montiert ist, der bezogen auf eine Hauptvorwärtsfahrtrichtung (D) eines Fahrzeugs (15), in das das Lichtleitelement (6) und die Kamera (2) eingebaut sind, in der Höhe gemessen wird, und einem zweiten Neigungswinkel (ϕ), der bezogen auf die Hauptvorwärtsfahrtrichtung (D) zur Seite gemessen wird.

6. Anordnung nach Anspruch 5, **dadurch gekennzeichnet, dass** die Kamera (2) eine Bildverarbeitungsvorrichtung (14) umfasst, die so angeordnet ist, dass sie jegliche unerwünschte Ausrichtung der erfassten Bilder ausgleicht.

7. Anordnung nach Anspruch 5, **dadurch gekennzeichnet, dass** das Lichtleitelement ein Dichtungselement (11) umfasst, das so angeordnet ist, dass es zwischen der Austrittsfläche (8) und dem Kameraobjektiv (4) platziert ist, wobei das Dichtungselement (11) so angeordnet ist, dass ein Raum (12) zwischen der Austrittsfläche (8) und dem Kameraobjektiv (4) abgedichtet wird.

## Revendications

1. Agencement d'une vitre de véhicule (1), d'un dispositif de caméra (2) et d'un élément de guidage de la lumière (6) interposé, le dispositif de caméra (2) comprenant un objectif de caméra (4), l'élément de guidage de la lumière comprenant une surface d'entrée (7) et une surface de sortie (8), la surface d'entrée (7) étant disposée face à la vitre de véhicule (1) et la surface de sortie (8) étant disposée face à l'objectif de caméra (4) lorsque l'élément de guidage de la lumière (6) est monté, l'élément de guidage de la lumière (6) comprenant une surface réfléchissante (9), la surface réfléchissante (9) étant disposée pour guider la lumière provenant de la surface d'entrée (7) vers la surface de sortie (8) par réflexion sur la surface de réflexion (9), **caractérisé par** une disposition de la surface de sortie (8) telle qu'un premier angle de réfraction (αᵣ) de la lumière ayant pénétré par la surface d'entrée (7) vers la surface réfléchissante (9) est égal à un second angle d'incidence (γᵢ) de la lumière sur la surface de sortie (8) provenant de la surface réfléchissante (9), lesdits angles (αᵣ, γᵢ) étant mesurés respectivement à partir des droites de référence (N1, N3), lesdites droites de référence (N1, N3) étant perpendiculaires respectivement aux surfaces (7, 8).

2. Agencement selon la revendication 1, **caractérisé en ce que** l'élément de guidage de la lumière (6) possède un premier indice de réfraction (*n*₁) égal à un second indice de réfraction (*n*₂) d'une vitre de véhicule (1).

3. Agencement selon l'une quelconque des revendications précédentes, **caractérisé en ce qu'au** moins une des surfaces d'entrée (7) et de sortie (8) comporte un revêtement antireflet.

4. Agencement selon l'une quelconque des revendications précédentes, **caractérisé en ce que** la surface réfléchissante comporte un revêtement réfléchissant.

5. Agencement selon l'une quelconque des revendications précédentes, **caractérisé par** une disposition de la surface d'entrée (7), de la surface de sortie (8) et de la surface réfléchissante (9) telle que la caméra (2) est montée avec un premier angle de tangage (θ), mesuré en élévation à partir d'une direction principale de déplacement vers l'avant (D) d'un véhicule (15) dans lequel sont montés l'élément de guidage de la lumière (6) et la caméra (2), et avec un second angle de lacet (ϕ), mesuré en azimut à partir de ladite direction principale de déplacement vers l'avant (D).

6. Agencement selon la revendication 5, **caractérisé en ce que** la caméra (2) comporte un dispositif de traitement d'image (14) configuré pour compenser toute orientation indésirable des images détectées.

7. Agencement selon la revendication 5, **caractérisé en ce que** l'élément de guidage de la lumière comporte un élément de joint (11) configuré pour être placé entre la surface de sortie (8) et l'objectif de caméra (4), l'élément de joint (11) étant configuré pour étanchéifier un espace (12) entre la surface de sortie (8) et l'objectif de caméra (4).
